# EUROPÄISCHE PATENTSCHRIFT

(11) **EP 3 292 888 B1**
(45) Veröffentlichungstag und Bekanntmachung des Hinweises auf die Patenterteilung: **27.10.2021**
(21) Anmeldenummer: 17184985.4
(22) Anmeldetag: 04.08.2017
(51) Int. Cl.: A62C 27/00

(54) **EINSATZFAHRZEUG, INSBESONDERE FEUERWEHRFAHRZEUG**
EMERGENCY VEHICLE, IN PARTICULAR A FIRE BRIGADE VEHICLE
VÉHICULE D'INTERVENTION, EN PARTICULIER VÉHICULE DE LUTTE CONTRE L'INCENDIE

(30) Priorität: 07.09.2016 DE 102016217036
(43) Veröffentlichungstag der Anmeldung: 14.03.2018
(73) Patentinhaber: Albert Ziegler GmbH, 89537 Giengen an der Brenz (DE)
(72) Erfinder: Schäble, Holger, 89551 Königsbronn (DE); Quintenz, Tobias, 89275 Elchingen (DE)
(74) Vertreter: Patentanwälte Magenbauer & Kollegen Partnerschaft mbB

(56) Entgegenhaltungen:
- EP-A1- 1 523 083
- EP-A2- 0 611 143
- WO-A2-2014/043733
- DE-A1- 3 038 334
- DE-A1-102005 057 200
- US-A- 1 772 247
- US-A- 5 494 112
- US-A- 6 009 953
- US-A1- 2007 200 428
- US-A1- 2013 228 345

## Beschreibung

Die Erfindung betrifft ein Einsatzfahrzeug, insbesondere Feuerwehrfahrzeug, mit einem Bordnetz zur elektrischen Versorgung elektrischer Verbraucher an Bord des Einsatzfahrzeugs.

Derartige Einsatzfahrzeuge sind bereits seit Langem bekannt. Die Bordnetze sind für Spannungen von 12V oder 24V ausgelegt. Damit liegen diese Spannungen im sogenannten Kleinspannungsbereich, was aufwändige und teure Sicherheitsmaßnahmen, beispielsweise einen Berührschutz, wie sie im Mittel- und Hochspannungsbereich erforderlich sind, entbehrlich macht.

Jedoch sind Bordnetze von 12V oder 24V nicht geeignet, die elektrischen Verbraucher, beispielsweise elektrisch angetriebene Pumpen an Bord des Einsatzfahrzeugs, im gesamten Leistungsspektrum anzutreiben.

Aufgabe der Erfindung ist es daher, ein Einsatzfahrzeug der eingangs erwähnten Art zu schaffen, dessen Bordnetz den Betrieb eines breiteren Spektrums an elektrischen Verbrauchern erlaubt.

Diese Aufgabe wird durch ein Einsatzfahrzeug mit den Merkmalen des unabhängigen Anspruchs 1 gelöst.

Das erfindungsgemäße Einsatzfahrzeug zeichnet sich dadurch aus, dass das Bordnetz wenigstens einen Kleinspannungsgenerator zur Erzeugung einer Kleinspannung im Bereich von 30V bis 60V aufweist.

Dadurch ist es möglich, eine größere Anzahl an elektrischen Verbrauchern im Vergleich zu den aus dem Stand der Technik bekannten Bordnetzen mit 12v oder 24V elektrisch zu versorgen. Ferner ist es auch möglich, die elektrischen Verbraucher in einem größeren Leistungsspektrum zu betreiben. So ist es beispielsweise möglich, elektrische Antriebe für beispielsweise Pumpen in einem höheren Drehzahlbereich zu betreiben. Dennoch liegt die erzeugte Kleinspannung im Kleinspannungsbereich, so dass aufwändige Sicherheitsmaßnahmen entbehrlich sind.

In besonders bevorzugter Weise liegt die vom Kleinspannungsgenerator erzeugte Kleinspannung im Bereich von 45V bis 55V.

In besonders bevorzugter Weise handelt es sich bei dem Kleinspannungsgenerator um einen 48V-Generator.

Bei einer Weiterbildung der Erfindung ist der Kleinspannungsgenerator als Gleichspannungsgenerator ausgebildet. Der Gleichspannungsgenerator bietet im Vergleich zu Wechselspannungsgeneratoren Vorteile. Beispielsweise wenn eine Löschwasserpumpe in Form einer Feuerlöschkreiselpumpe betrieben wird, die an einem Nebenabtrieb des Fahrzeugmotors des Einsatzfahrzeugs hängt. Besteht der Bedarf, den Druck an den Druckabgängen zu ändern, wird dies durch Regulierung der Motordrehzahl des Fahrzeugmotors und somit über die Ankopplung über den Nebenabtrieb durch Änderung der Drehzahl der Feuerlöschkreiselpumpe erzielt. Hängt nun ein Generator in Form eines Wechselstromgenerator ebenfalls am Nebenabtrieb, so ändert sich die vom Wechselstromgenerator erzeugte Ausgangsspannung in Abhängigkeit der Motordrehzahl. Diese Schwankungen der Ausgangsspannung erfordern eine Ausgleichseinrichtung, beispielsweise in Form eines Gleichrichters. Bei einem Gleichspannungsgenerator bleibt die Ausgangsspannung jedoch konstant, so dass beispielsweise die Änderung der Motordrehzahl keine Auswirkungen auf die Ausgangsspannung hat und Ausgleichseinrichtungen wie Gleichrichter entfallen können.

Erfindungsgemäß ist der Kleinspannungsgenerator von einem Fahrzeugmotor des Einsatzfahrzeugs antreibbar. Der

Kleinspannungsgenerator ist mit einem Nebenabtrieb des Fahrzeuggetriebes gekoppelt. Beispielsweise ist zwischen dem Nebenabtrieb und dem Kleinspannungsgenerator ein Zwischengetriebe eingeschaltet, an dem wenigstens ein weiteres Abtriebsglied, beispielsweise Löschwasserpumpe, insbesondere Feuerlöschkreiselpumpe, angekoppelt oder ankoppelbar ist.

Bei der Erfindung umfassen die elektrischen Verbraucher an Bord des Einsatzfahrzeuges wenigstens einen elektrischen Pumpenantrieb.

In besonders bevorzugter Weise weist der elektrische Pumpenantrieb ein Stellglied auf, das über eine Steuerungs-/Regelungseinrichtung zur Variierung einer Stellgröße des elektrischen Pumpenantriebs ansteuerbar ist.

In besonders bevorzugter Weise handelt es sich bei dem Stellglied um einen Frequenzumrichter. Die Stellgröße des elektrischen Pumpenantriebs ist in diesem Fall die Drehzahl. Zweckmäßigerweise ist der Frequenzumrichter mit dem Kleinspannungsgenerator zur Spannungsversorgung des elektrischen Pumpenantriebs gekoppelt.

Im Falle eines als Gleichspannungsgenerator ausgebildeten Kleinspannungsgenerators können kostengünstige Frequenzumrichter ohne Gleichrichter eingesetzt werden, was zu einer Kostenreduktion führt.

Bei einer Weiterbildung der Erfindung besitzt das Einsatzfahrzeug, insbesondere ein Feuerlöschfahrzeug, eine Mischvorrichtung zur Herstellung von Löschmittel durch Beimischung wenigstens eines Additivs, beispielsweise Schaum, zu Löschwasser, wobei die Mischvorrichtung eine Additivpumpe zur Förderung von Additiv aufweist, die mittels eines elektrischen Additivpumpenantriebs antreibbar ist, dem der Frequenzumrichter zugeordnet ist.

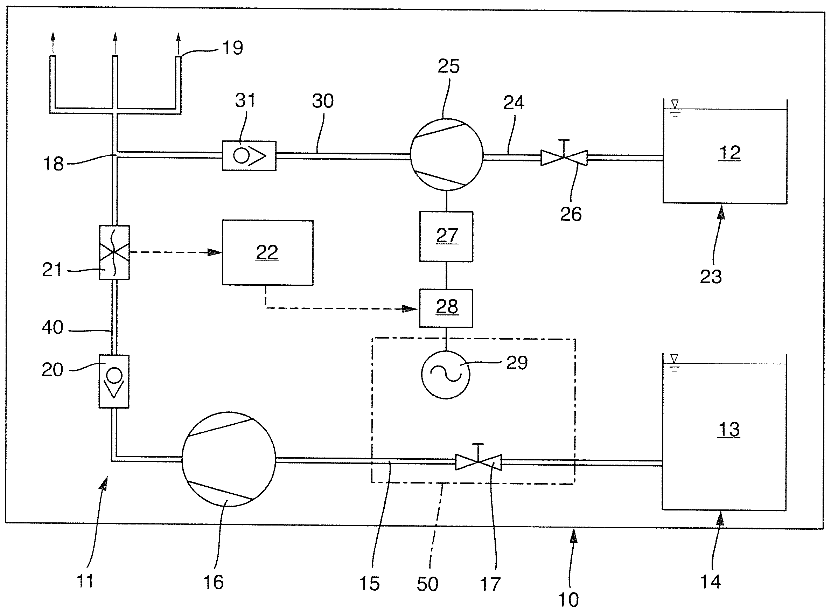

Ein bevorzugtes Ausführungsbeispiel des Einsatzfahrzeugs ist in der Zeichnung dargestellt und wird im Folgenden näher erläutert. Die einzige Zeichnung zeigt:
Eine schematische Darstellung eines bevorzugten Ausführungsbeispiels des erfindungsgemäßen Einsatzfahrzeugs mit einer Mischvorrichtung zur Herstellung von Löschmittel.

Die in der Zeichnung dargestellte Mischvorrichtung 11 ist in einem nur schematisch als Block gezeigten Einsatzfahrzeug 10 in Form eines Feuerwehrfahrzeugs, insbesondere Feuerlöschfahrzeugs, eingebaut.

Die Mischvorrichtung 11 dient zur Herstellung von Löschmittel zur Brandbekämpfung durch Beimischung wenigstens eines Additivs 12 zu Löschwasser 13. Als Additiv 12 kann beispielsweise Schaum verwendet werden, sodass das Löschmittel ein Löschwasser/Schaum-Gemisch ist.

Wie insbesondere in der Zeichnung gezeigt, ist das Löschwasser 13 in einen Löschwassertank 14 bevorratet. Der Tank befindet sich zweckmäßigerweise an Bord des Feuerwehrfahrzeugs. Alternativ ist es auch möglich, Löschwasser 13 aus zum Einsatzfahrzeug externen Löschwasserquellen zu beziehen, beispielsweise von einem Hydranten, aus Löschwasserteichen oder sonstigen Gewässern. Der Löschwassertank 14 ist über eine Saugleitung 15 mit einer Löschwasserpumpe 16 verbunden. In die Saugleitung 15 ist zweckmäßigerweise ein Absperrventil 17 eingebaut. Die Löschwasserpumpe 17 ist zweckmäßigerweise als Feuerlöschkreiselpumpe ausgebildet und ist von einem Fahrzeugmotor des Einsatzfahrzeugs angetrieben. Der Fahrzeugmotor (nicht dargestellt) besitzt in der Regel wenigstens einen Nebenabtrieb in Form einer Welle, an die die Feuerlöschkreiselpumpe angekoppelt ist.

In Strömungsrichtung hinter der Löschwasserpumpe 17 befindet sich eine Druckleitung 40, die sich an einer Zumischstelle 18 mit einer Additiv-Leitung vereinigt. In Strömungsrichtung hinter der Zumischstelle 18 mündet die vereinigte Leitung in mehrere Druckabgänge 19, an denen beispielsweise Feuerwehrschläuche anschließbar sind, an deren freien Enden Strahlrohre (nicht dargestellt) angeordnet sind.

In dem Strang zwischen der Löschwasserpumpe 17 und der Zumischstelle 18 ist ein Rückschlagglied 20, beispielsweise in Form eines Rückschlagventils oder einer Rückschlagklappe, eingebaut, wodurch der Rückfluss von Löschwasser bzw. Löschwasser/Additiv-Gemisch verhindert wird.

Ebenfalls im Strang zwischen der Löschmittelpumpe 14 und der Zumischstelle 18 befindet sich eine Durchflussmesseinrichtung 21. Die Durchflussmesseinrichtung 21 kann beispielsweise einen Durchflusssensor aufweisen. Prinzipiell sind alle Arten der Durchflussmessung geeignet, also beispielsweise akustische, gyroskopische, magnetisch-induktive, mechanischvolumetrische, optische, thermische und Wirkdruck-/ Stauverfahren. Die Durchflussmesseinrichtung 21 besitzt neben dem Durchflusssensor noch einen Messumformer, der zur Signalübertragung mit einer Steuerungs-/Regelungseinrichtung 22 gekoppelt ist. Die Signalübertragung von der Durchflussmesseinrichtung 21 zu Steuerungs-/Regeleinrichtung 22 kann drahtgebunden oder drahtlos sein.

Die Mischvorrichtung 11 besitzt neben dem Löschwassertank 14 noch einen ebenfalls an Bord des Einsatzfahrzeugs befindlichen Additivtank 23, in dem Additiv 12, also beispielsweise Schaum bevorratet ist. Der Additivtank 23 ist über eine Additiv-Saugleitung 24 mit einer Additivpumpe 25 verbunden. In die Additiv-Saugleitung 24 ist ebenfalls ein Absperrventil 26 eingebaut.

Die Additivpumpe 25 wird mittels eines elektrischen Additivpumpenantriebs 27 angetrieben. Zweckmäßigerweise handelt es sich bei dem Additivpumpenantrieb 27 um einen Elektromotor. Der Additivpumpenantrieb 27, also beispielsweise der Elektromotor, wird über ein Stellglied in Form eines Frequenzumrichters 28 angesteuert. Der Frequenzumrichter 28 wiederum ist mit der Steuerungs- und Regelungseinrichtung 22 gekoppelt. Die Signalübertragung von der Steuerungs- und Regelungseinrichtung 22 zum Frequenzumrichter 28 kann drahtgebunden oder drahtlos sein.

Zur Spannungsversorgung des Additivpumpenantriebs 27, also beispielsweise des Elektromotors dient eine Spannungsquelle des Bordnetzes 50 des Einsatzfahrzeugs. Die Spannungsquelle ist als Generator 29 ausgebildet. Als Generator 29 dient ein Kleinspannungsgenerator, der eine Kleinspannung im Bereich von 30V bis 60V erzeugt. Im Beispielsfall wird ein 48V-Generator verwendet. Zudem ist der Generator 29 als Gleichspannungsgenerator ausgebildet, sodass im Frequenzumformer 28 ein Gleichrichter entfällt, was zu einer Kostenreduzierung dieses Bauteils führt.

In Strömungsrichtung hinter der Additivpumpe 25 befindet sich eine Additiv-Druckleitung 30, die die Additivpumpe 25 an der Zumischstelle 18 mit der Druckleitung 40 verbindet. In dem Strang zwischen der Zumischstelle 18 und der Additivpumpe 25 ist ein Rückschlagglied 26, beispielsweise Rückschlagventil oder Rückschlagklappe, eingebaut, um den Rückfluss von Additiv bzw. Löschwasser/Additiv-Gemisch zu verhindern.

Das Verfahren zur Herstellung des Löschmittels läuft folgendermaßen ab:
Bei offenem Absperrventil 16 saugt die Löschwasserpumpe 16 Löschwasser 13 aus dem Löschwassertank 14 an und befördert es über die Druckleitung 40 zu den Druckabgängen 19. Gleichzeitig fördert die Additivpumpe 25 bei offenem Absperrventil 26 Additiv 12, insbesondere Schaum, vom Additivtank 23 zur Zumischstelle 18. An der Zumischstelle 18 wird auf Basis der eingestellten Zumischrate eine bestimmte Menge an Additiv 12, also beispielsweise Schaum, dem Löschwasser 13 beigemischt. Dieses Löschwasser/Additiv-Gemisch, also das Löschmittel, wird dann den Druckabgängen 19 zugeleitet.

Um die Zumischrate bei sich ändernder Durchflussmenge an Löschwasser 13 konstant zu halten, erfolgt eine insbesondere permanente Messung der Ist-Durchflussmenge des Löschwassers 13 mittels der Durchflussmesseinrichtung 21. Der Messumformer in der Durchflussmesseinrichtung 21 generiert anhand des gemessenen Istwertes der Durchflussmenge ein Signal, das an die Steuerungs- und Regelungseinrichtung 22 übertragen wird. In der Steuerungs- und Regelungseinrichtung 22 ist die gewünschte Zumischrate für eine bestimmte Durchflussmenge des Löschwassers 13 bereits voreingestellt. Ändert sich nun die Durchflussmenge des Löschwassers 13, so muss auch die Menge des zugeführten Additivs 12 nachjustiert werden. Hierzu steuert die Steuerungs- und Regeleinrichtung 22 den Frequenzumrichter 28 mittels eines Steuersignals an. Der Frequenz 28 hängt an dem Generator 29, der zur Spannungsversorgung des elektrischen Additivpumpenantriebs 27 dient. In Abhängigkeit des eingehenden Steuersignals steuert der Frequenzumformer 28 den elektrischen Additivpumpenantrieb 27 an, und zwar durch Einstellung einer der Zumischrate entsprechenden Drehzahl des elektrischen Additivpumpenantriebs 27, wodurch die Förderleistung der Additivpumpe 25 ja nach Bedarf erhöht oder verringert wird, sodass die Zumischrate auf die sich ändernde Durchflussmenge des Löschwassers 13 angepasst wird.

## Patentansprüche

1. Einsatzfahrzeug mit einem Bordnetz (50) zur elektrischen Versorgung elektrischer Verbraucher an Bord des Einsatzfahrzeugs, wobei das Bordnetz (50) wenigstens einen Kleinspannungsgenerator (29) zur Erzeugung einer Kleinspannung im Bereich von 30V bis 60V aufweist, **dadurch gekennzeichnet, dass** die elektrischen Verbraucher an Bord des Einsatzfahrzeugs (10) wenigstens einen elektrischen Pumpenantrieb (27) umfassen, wobei der Kleinspannungsgenerator (29) von einem Fahrzeugmotor des Einsatzfahrzeugs (10) antreibbar ist, und wobei der Kleinspannungsgenerator (29) mit einem Nebenabtrieb eines Fahrzeuggetriebes gekoppelt ist.

2. Einsatzfahrzeug nach Anspruch 1, **dadurch gekennzeichnet, dass** die vom Kleinspannungsgenerator (29) erzeugte Kleinspannung im Bereich von 45V bis 55V liegt.

3. Einsatzfahrzeug nach Anspruch 2, **dadurch gekennzeichnet, dass** der Kleinspannungsgenerator (29) als 48V-Generator zur Erzeugung einer Kleinspannung von 48V ausgebildet ist.

4. Einsatzfahrzeug nach einem der vorhergehenden Ansprüche, **dadurch gekennzeichnet, dass** der Kleinspannungsgenerator (29) als Gleichspannungsgenerator ausgebildet ist.

5. Einsatzfahrzeug nach einem der vorhergehenden Ansprüche, **dadurch gekennzeichnet, dass** zwischen dem Nebenantrieb und dem Kleinspannungsgenerator (29) ein Zwischengetriebe eingeschaltet ist, an dem wenigstens ein weiteres Abtriebsglied, beispielsweise Löschwasserpumpe (16), insbesondere Feuerlöschkreiselpumpe, angekoppelt oder ankoppelbar ist.

6. Einsatzfahrzeug nach einem der vorhergehenden Ansprüche, **dadurch gekennzeichnet, dass** der elektrische Pumpenantrieb (27) ein Stellglied aufweist, das über eine Steuerung-/Regelungseinrichtung (22) zur Variierung einer Stellgröße des elektrischen Pumpenantriebs (27) ansteuerbar ist.

7. Einsatzfahrzeug nach Anspruch 6, **dadurch gekennzeichnet, dass** das Stellglied als Frequenzumrichter (28) ausgebildet ist und die Stellgröße des elektrischen Pumpenantriebs (27) die Drehzahl ist, wobei der Frequenzumformer mit dem Kleinspannungsgenerator (29) zur Spannungsversorgung des elektrischen Pumpenantriebs (27) gekoppelt ist.

8. Einsatzfahrzeug nach Anspruch 7, **dadurch gekennzeichnet, dass** der Frequenzumrichter (28) im Falle eines als Gleichspannungsgenerator ausgebildeten Kleinspannungsgenerators (29) frei von einem Gleichrichter ist.

9. Einsatzfahrzeug nach einem der vorhergehenden Ansprüche, **gekennzeichnet durch** eine Mischvorrichtung (11) zur Herstellung von Löschmittel durch Beimischung wenigstens eines Additivs (12) zu Löschwasser (13), wobei die Mischvorrichtung (11) eine Additivpumpe (25) zur Förderung von Additiv (12) aufweist, die mittels eines elektrischen Additivpumpenantriebs (27) antreibbar ist, dem der Frequenzumrichter (28) zugeordnet ist.

## Claims

1. Emergency vehicle with a vehicle electrical system (50) for the electrical supply of electrical loads onboard the emergency vehicle, wherein the vehicle electrical system (50) has at least one low voltage generator (29) to generate a low voltage in the range of 30V to 60V, **characterised in that** the electrical loads onboard the emergency vehicle (10) comprise at least one electrical pump drive (27), wherein the low voltage generator (29) may be driven by a vehicle engine of the emergency vehicle (10), and wherein the low voltage generator (29) is coupled to a power take-off of a vehicle transmission.

2. Emergency vehicle according to claim 1, **characterised in that** the low voltage generated by the low voltage generator (29) lies in the range of 45V to 55V.

3. Emergency vehicle according to claim 2, **characterised in that** the low voltage generator (29) is designed as a 48V generator to generate a low voltage of 48V.

4. Emergency vehicle according to any of the preceding claims **characterised in that** the low voltage generator (29) is designed as a d.c. voltage generator.

5. Emergency vehicle according to any of the preceding claims **characterised in that**, between the power take-off and the low voltage generator (29) there is connected an intermediate gear, to which at least one further driven member, for example an extinguishing water pump (16), in particular a fire extinguishing centrifugal pump, is or may be coupled.

6. Emergency vehicle according to any of the preceding claims **characterised in that** the electrical pump drive (27) has an actuator which may be controlled through a control/regulating unit (22) to vary a control variable of the electrical pump drive (27).

7. Emergency vehicle according to claim 6, **characterised in that** the actuator is in the form of a frequency converter (28) and the control variable of the electrical pump drive (27) is the speed, wherein the frequency converter is connected to the low voltage generator (29) to supply power to the electrical pump drive (27).

8. Emergency vehicle according to claim 7, **characterised in that** the frequency converter (28), in the case of a low voltage generator (29) in the form of a d.c. voltage generator, is free from a rectifier.

9. Emergency vehicle according to any of the preceding claims, **characterised by** a mixing apparatus (11) to create extinguishing agent by admixture of at least one additive (12) to extinguishing water (13), wherein the mixing apparatus (11) has an additive pump (25) for the conveyance of additive (12) which may be driven by an electrical additive pump drive (27) to which the frequency converter (28) is assigned.

## Revendications

1. Véhicule d'intervention avec un réseau de bord (50) pour l'alimentation électrique de consommateurs électriques à bord du véhicule d'intervention, dans lequel le réseau de bord (50) présente au moins un générateur de petite tension (29) pour produire une petite tension dans la plage de 30 V à 60 V, **caractérisé en ce que** les consommateurs électriques à bord du véhicule d'intervention (10) comprennent au moins un entraînement de pompe (27) électrique, dans lequel le générateur de petite tension (29) peut être entraîné par un moteur de véhicule du véhicule d'intervention (10), et dans lequel le générateur de petite tension (29) est couplé à une sortie secondaire d'une transmission de véhicule.

2. Véhicule d'intervention selon la revendication 1, **caractérisé en ce que** la petite tension produite par le générateur de petite tension (29) se situe dans la plage de 45 V à 55 V.

3. Véhicule d'intervention selon la revendication 2, **caractérisé en ce que** le générateur de petite tension (29) est réalisé en tant que générateur 48 V pour produire une petite tension de 48 V.

4. Véhicule d'intervention selon l'une quelconque des revendications précédentes, **caractérisé en ce que** le générateur de petite tension (29) est réalisé en tant que générateur de tension continue.

5. Véhicule d'intervention selon l'une quelconque des revendications précédentes, **caractérisé en ce qu'**est intercalé entre l'entraînement secondaire et le générateur de petite tension (29) une transmission intermédiaire, à laquelle est accouplé ou peut être accouplé au moins un autre organe de sortie, par exemple une pompe d'eau d'extinction (16), en particulier une pompe centrifuge à incendie.

6. Véhicule d'intervention selon l'une quelconque des revendications précédentes, **caractérisé en ce que** l'entraînement de pompe (27) électrique présente un organe de réglage, qui peut être piloté par l'intermédiaire d'un système de commande/régulation (22) pour faire varier une grandeur de réglage de l'entraînement de pompe (27) électrique.

7. Véhicule d'intervention selon la revendication 6, **caractérisé en ce que** l'organe de réglage est réalisé en tant que convertisseur de fréquence (28) et la grandeur de réglage de l'entraînement de pompe (27) électrique est la vitesse de rotation, dans lequel le convertisseur de fréquence est couplé au générateur de petite tension (29) pour l'alimentation en tension de l'entraînement de pompe (27) électrique.

8. Véhicule d'intervention selon la revendication 7, **caractérisé en ce que** le convertisseur de fréquence (28) est, dans le cas d'un générateur de petite tension (29) réalisé en tant que générateur de tension continue, sans un redresseur.

9. Véhicule d'intervention selon l'une quelconque des revendications précédentes, **caractérisé par** un dispositif de mélange (11) pour fabriquer du produit d'extinction en mélangeant au moins un additif (12) à de l'eau d'extinction (13), dans lequel le dispositif de mélange (11) présente une pompe d'additif (25) pour refouler de l'additif (12), qui peut être entraînée au moyen d'un entraînement de pompe d'additif (27) électrique, auquel le convertisseur de fréquence (28) est associé.
